# EUROPÄISCHE PATENTANMELDUNG

(11) **EP 1 775 169 A1**
(43) Veröffentlichungstag der Anmeldung: **18.04.2007**
(21) Anmeldenummer: 06021024.2
(22) Anmeldetag: 06.10.2006
(51) Int. Cl.: B60R 13/08, B32B 3/26, B32B 5/18, B32B 17/04, B32B 27/04, B32B 27/32, B32B 27/34, B32B 37/10, B29C 70/06, B29C 70/50, B62D 29/04, B62D 25/20

(54) **Formteil, insbesondere für die Unterbodenauskleidung an Fahrzeugen**

(30) Priorität: 14.10.2005 DE 102005049732
(71) Anmelder: Nordenia Deutschland Gronau GmbH, 48599 Gronau (DE)
(72) Erfinder: Geurts, Patrick, 48599 Gronau (DE); Kiriazis, Lenidas, 48151 Münster (DE); Hagemann, Andreas, 46414 Rhede (DE)
(74) Vertreter: Albrecht, Rainer Harald

(57) **Zusammenfassung**

Die Erfindung betrifft ein Formteil, insbesondere für die Unterbodenauskleidung an Fahrzeugen. Das Formteil besteht aus einem thermoformbaren Verbundmaterial (3) mit einem Träger (1) und einer auf den Träger (1) aufkaschierten Schutzfolie (2). Erfindungsgemäß ist die Schutzfolie (2) mehrschichtig ausgebildet und weist zumindest eine thermostabile Schicht (6) auf, deren Schmelztemperatur oberhalb der Umformtemperatur des thermoformbaren Verbundmaterials liegt.

## Beschreibung

Die Erfindung betrifft ein Formteil, insbesondere für die Unterbodenauskleidung an Fahrzeugen, bestehend aus einem thermoformbaren Verbundmaterial mit einem Träger und einer auf den Träger heißkaschierten Schutzfolie. Derartige Formteile werden flächig an dem Unterboden von Fahrzeugen und als Verkleidung in den Radhäusern eingesetzt und schützen den Fahrzeugunterboden vor Nässe und mechanischen Beschädigungen, die beispielsweise durch hochgeschleuderte Steine hervorgerufen werden können. Des Weiteren tragen die Formteile zu einer Geräuschdämmung und zu einer Verbesserung der Aerodynamik des Fahrzeuges bei.

Aus der Praxis sind Kunststoffformteile mit einem glasfaserverstärkten Träger aus Polypropylen bekannt. Um die Aufnahme von Wasser durch den Träger zu vermeiden und den Träger selbst vor mechanischen Schäden zu schützen, ist auf den Träger, zumindest fahrbahnseitig, eine Schutzfolie aus Polypropylen aufkaschiert. Bei der Herstellung des Kunststoffformteiles wird die Schutzfolie durch Druck und Temperatur auf den Träger aufkaschiert. Das aus dem Träger und der Schutzfolie gebildete thermoformbare Verbundmaterial wird anschließend bei einer Temperatur oberhalb der Schmelztemperatur von Träger und Schutzfolie zu dem Formteil umgeformt, wobei sich bei der Umformung der schmelzflüssigen Schutzfolie Löcher bilden können.

Ausgehend von den bekannten Kunststoffformteilen beschreibt die DE 103 42 613 A1 eine alternative Ausführung, bei der glasfaserverstärkte Deckschichten um eine geschäumte Kernschicht angeordnet sind. Die außenliegenden, glasfaserverstärkten Deckschichten sind nicht vor Feuchtigkeit oder mechanischen Beschädigungen geschützt.

Aus der Druckschrift DE 100 01 210 C1 ist eine thermoformbare Verbundfolie zum Verbinden einer Lederschicht mit einer Trägerschicht bekannt. Die Verbundfolie dient dabei als ausgleichende Zwischenschicht, die mit der Trägerschicht und der Lederschicht verklebt ist und eine Schaumstoffschicht aufweist. Die Verbundfolie kann auf die Trägerschicht aufkaschiert oder durch ein Tiefziehverfahren auf die Trägerschicht aufgezogen werden. Eine gemeinsame Umformung von Verbundfolie und Trägerschicht ist nicht vorgesehen.

Die Druckschrift EP 0 904 198 B1 betrifft eine mehrschichtige Folie mit einer Barriereschicht aus Polyamid für die Herstellung von Pressmassen ("Sheet Molding Compount", SMC). Die teigartige Pressmasse besteht im Wesentlichen aus einem Reaktionsharz, geschnittenen Fasern und mineralischen Füllstoffen. Vor dem Aushärten des duoplastischen Reaktionsharzes wird die viskose Pressmasse umgeformt, wodurch nach dem vollständigen Aushärten ein formstabiles Kunststoffteil gebildet wird.

Der Erfindung liegt die Aufgabe zugrunde, bei einem Formteil, insbesondere für die Unterbodenauskleidung an Fahrzeugen, bestehend aus einem thermoformbaren Verbundmaterial mit einem Träger und einer auf den Träger aufkaschierten Schutzfolie, die mechanischen Eigenschaften und den Schutz des Trägers zu verbessern.

Ausgehend von einem Formteil, insbesondere für die Unterhodenauskleidung an Fahrzeugen mit den eingangs beschriebenen Merkmalen wird die Aufgabe erfindungsgemäß dadurch gelöst, dass die Schutzfolie mehrschichtig ausgebildet ist und zumindest eine thermostabile Schicht aufweist, deren Schmelztemperatur oberhalb der Umformtemperatur des thermoformbaren Verbundmaterials liegt. Da die Schmelztemperatur der thermostabilen Schicht oberhalb der Umformtemperatur liegt, wird eine Lochbildung vermieden und ist der Träger stets vollflächig von der Schutzfolie abgedeckt und geschützt. Die mehrschichtig ausgebildete Schutzfolie kann auch weitere funktionelle Schichten, beispielsweise zur Verbesserung der Schalldämmeigenschaften und/oder der mechanischen Eigenschaften aufweisen.

Der Träger kann sowohl einschichtig als auch mehrschichtig aus thermoplastischen Polymeren gebildet sein, wobei die Schicht des Trägers, auf die die Schutzfolie aufkaschiert ist in einer bevorzugten Ausführung der Erfindung aus einem Polyolefin, beispielsweise Polyethylen, Polypropylen, einem Polyethylen-Copolymer, einem Polypropylen-Copolymer oder Mischungen dieser Polymere, besteht. Die Schicht aus Polyolefin kann im Rahmen der Erfindung zur Verbesserung der mechanischen Eigenschaften, beispielsweise durch Glasfasern, Kohlenstofffasern, Amidfasern, Stahlfasern und/oder Naturfasern, faserverstärkt sein. Insbesondere Schichten aus glasfaserverstärktem Polypropylen (PP-GF) oder aus glasmattenverstärktem Polypropylen (PP-GMT) weisen auch bei einer einschichtigen Ausführung des Trägers eine gute Stabilität und Haltbarkeit auf und sind vergleichsweise kostengünstig zu fertigen. Neben den genannten Polyolefinen können auch ohne Einschränkung andere Polymere wie Polyamid (PA) oder Polyethylenterephthalat (PET) als Material eines einschichtigen Trägers oder als Material einer Schicht eines mehrschichtigen Trägers Verwendung finden, wobei optional auch eine Verstärkung durch Fasern wie zuvor beschrieben möglich ist.

Formteile für die Unterbodenauskleidung an Fahrzeugen unterliegen großen thermischen und mechanischen Belastungen und müssen für einen dauerhaften Einsatz ausgelegt sein. Um unter diesen Bedingungen eine dauerhafte Verbundfestigkeit zwischen Träger und Schutzfolie zu gewährleisten, bestehen die angrenzenden Schichten von Träger und Schutzfolie vorzugsweise im Wesentlichen aus dem gleichen Polymer, wobei jedoch in der an den Träger angrenzenden Schicht der Schutzfolie üblicherweise keine Faserverstärkung notwendig ist. Dadurch, dass die angrenzenden Schichten von Träger und Schutzfolie im Wesentlichen aus dem gleichen Polymer bestehen, kommt es bei einem Heißkaschieren der Schutzfolie auf den Träger ohne einen zusätzlichen Klebstoff zu einem Verschmelzen der Schichten, wodurch diese dauerhaft verbunden werden. Die an den Träger angrenzende Schicht der Schutzfolie besteht vorzugsweise aus Polypropylen.

In weiterer Ausgestaltung der Erfindung ist vorgesehen, dass die Schutzfolie mit einer Dicke von typischerweise 40 µm und 400 µm, vorzugsweise zwischen 150 µm und 250 µm, coextrudiert ist. Die Schutzfolie kann eine Kernschicht aus Polyamid (PA), vorzugsweise zähem Polyamid 6 (PA 6), als thermostabile Schicht aufweisen. PA 6 weist typischerweise eine deutlich höhere Schmelztemperatur als die Homo- und Copolymerisate von Polyethylen und Polypropylen sowie deren Gemische auf. Des Weiteren weist PA 6 eine ausreichende Extrudierbarkeit und Verformbarkeit auf. Die thermostabile Schicht weist typischerweise eine Dicke zwischen 2 µm und 50 µm, vorzugsweise zwischen 5 µm und 10 µm, auf.

Im Rahmen der Erfindung kann die Schutzfolie zur Verbesserung der Schalldämmeigenschaften und/oder mechanischen Eigenschaften eine Schicht aus einem Styrol-Block-Copolymer aufweisen. Styrol-Block-Copolymere wie beispielsweise Styrol-Butadien-Styrol-Block-Copolymer (SBS), Styrol-Isopren-Styrol-Block-Copolymer (SIS), Styrol-Ethenbuten-Styrol-Block-Copolymer (SEBS), Styrol-Isobutylen-Styrol-(Triblock)-Copolymer (SIBS) oder auch Styrol-Ethenpropen-Styrol-Block-Copolymer (SEPS) zählen zu den thermoplastischen Elastomeren. Aufgrund der elastischen Eigenschaften kann die Schicht aus Styrol-Block-Copolymer mechanische Belastungen kompensieren und auf eine größere Fläche verteilen, wodurch insbesondere die Schlagfestigkeit der Schutzfolie deutlich erhöht wird. Zusätzlich zeichnet sich eine Schicht aus Styrol-Block-Copolymer durch eine gute Dämmwirkung gegenüber Schall und mechanischen Schwingungen aus. Die Schicht aus Styrol-Block-Copolymer, die typischerweise eine Dicke zwischen 50 µm und 200 µm, vorzugsweise zwischen 80 µm und 120 µm aufweist, kann fahrbahnseitig als außenliegende Schicht oder als Zwischenschicht der Schutzfolie angeordnet sein.

Die Schutzfolie kann an der von dem Träger abgewandten Außenseite des thermoformbaren Verbundmaterials eine Schicht aus Polypropylen aufweisen. Polypropylen zeichnet sich durch eine gute Extrudierbarkeit aus und kann als Schutzschicht mit einer hohen Abrieb- und Schlagfestigkeit mit einer Dicke zwischen typischerweise 50 µm und 200 µm vorgesehen sein. Ist zur Verbesserung der Schalldämmeigenschaften und/oder mechanischen Eigenschaften eine Schicht aus Styrol-Block-Copolymer vorgesehen, kann zweckmäßig auch eine dünne außenliegende Polypropylenschicht mit einer Dicke zwischen 2 µm und 20 µm vorgesehen sein, die an die Schicht aus Styrol-Block-Copolymer angrenzt. Durch die dünne außenliegende Polypropylenschicht können bei der Coextrusion der mehrschichtigen Schutzfolie Ablagerungen der klebrigen thermoplastischen Elastomere an der Extrusionsdüse vermieden werden.

In einer bevorzugten Ausgestaltung der Erfindung ist vorgesehen, dass das Verbundmaterial an der vom Träger abgewandten Seite Nadeleinstiche aufweist, die eine akustische Dämpfungswirkung aufweisen. Die Nadeleinstiche erstrecken sich dabei vorzugsweise durch die gesamte Schutzfolie bis in den Träger hinein. Die durch die Nadeleinstiche erzeugten Löcher bewirken je nach Größe der Lochung die Absorption bestimmter Schallfrequenzen. Insbesondere mittlere und hohe Frequenzen können durch das Einbringen von Nadeleinstichen in das Formteil effektiv unterdrückt werden. Zur weiteren Verbesserung der Schallabsorption und/oder der Absorption in tieferen Frequenzbereichen weist der Träger bevorzugt eine offene Struktur auf, wobei die Nadeleinstiche bis in den Träger reichen. Durch die offene Struktur, die beispielsweise durch einen hohen Faseranteil bei einem glasmattenverstärkten oder glasfaserverstärktem Träger erzeugt werden kann, wird das schalldämpfend wirkende Volumen des Formteils vergrößert.

Im Rahmen der Erfindung kann vorgesehen sein, dass die Schutzfolie zumindest eine aufgeschäumte Folienschicht aufweist, die vorzugsweise an der von dem Träger abgewandten Seite des Formteils angeordnet ist. Die aufgeschäumte Folienschicht kann aufgrund ihrer Elastizität sowohl die Stabilität der Folie, insbesondere bei Steinschlag, und die Schallabsorption verbessern. Um eine besonders gute Schallabsorption zu ermöglichen, weist die aufgeschäumte Folienschicht vorzugsweise eine offenporige Struktur auf. Zur Erzeugung der aufgeschäumten Folienschicht wird typischerweise bei der Extrusion bzw. Coextrusion ein Schaumbildner zugesetzt, so dass sich im schmelzflüssigen Zustand Gasblasen oder schwammartige Strukturen bilden können. Um bei dem Kaschieren mit dem Träger ein Zusammenfallen der aufgeschäumten Folienschicht zu verhindern, muss diese eine ausreichende Temperaturbeständigkeit aufweisen. So ist in einer besonders bevorzugten Ausgestaltung der Erfindung vorgesehen, dass die thermostabile Schicht aufgeschäumt ist.

Die beschriebenen Maßnahmen zur Verbesserung der Schalladsorption und der mechanischen Eigenschaften können im Rahmen der Erfindung ohne Einschränkung miteinander kombiniert werden.

Die Verwendung der erfindungsgemäßen Formteile ist nicht auf die Unterbodenauskleidung an Fahrzeugen beschränkt. So gewährleisten die erfindungsgemäßen Formteile beispielsweise auch als Gehäuseteile von Maschinen oder als Auskleidung von Maschinengehäusen einen guten mechanischen Schutz und ermöglichen eine effektive Geräuschdämmung.

Die Erfindung betrifft auch ein Verfahren zur Herstellung eines Formteiles, insbesondere für die Unterbodenauskleidung an Fahrzeugen, wobei eine mehrschichtige Schutzfolie durch Druck und Temperatur auf einen Träger aufkaschiert wird und nachfolgend das aus dem Träger und der Schutzfolie gebildete thermoformbare Verbundmaterial in einer Presse zu dem Formteil umgeformt wird. Die Schutzfolie wird dabei vorzugsweise in einer Doppelbandpresse bei einer Temperatur zwischen 180° C und 250° C, vorzugsweise zwischen 190° C und 210° C, auf den Träger aufkaschiert. Die Kaschierung erfolgt typischerweise ohne die Zugabe eines zusätzlichen Klebstoffes, wobei die angrenzenden Schichten von Träger und Schutzfolie bei der Heißkaschierung miteinander verschmelzen und so dauerhaft verbunden werden. Das aus dem Träger und der Schutzfolie gebildete thermoformbare Verbundmaterial wird in der Presse typischerweise bei einer Umformtemperatur zwischen 180° C und 250° C, vorzugsweise zwischen 190° C und 210° C, zu dem Formteil umgeformt. Die Umformtemperatur liegt dabei unterhalb der Schmelztemperatur einer thermostabilen Schicht der mehrschichtig ausgebildeten Schutzfolie. Dadurch, dass die thermostabile Schicht weder an- noch aufschmelzt, kann bei einer Umformung des Verbundmaterials bei einer ausreichenden Dehnbarkeit der thermostabilen Schicht eine Bildung von Löchern vermieden werden.

In einer bevorzugten Ausgestaltung des erfindungsgemäßen Verfahrens ist vorgesehen, dass das thermoformbare Verbundmaterial einer Nadelung unterzogen wird, wobei das Verbundmaterial an der von dem Träger abgewandten Seite mit Nadeleinstichen versehen wird. Die Nadelung erfolgt dabei zweckmäßigerweise nach dem Aufkaschieren der Schutzfolie auf den Träger, da ansonsten die durch die Nadeleinstiche erzeugten Löcher durch die Einwirkung von Druck und Temperatur bei dem Kaschieren verschlossen werden können. Die Nadelstiche können dabei bei dem kaschierten, thermoformbaren Verbundmaterial durch eine mit Nadeln versehene Nadelwalze erzeugt werden. In einer alternativen Ausgestaltung des erfindungsgemäßen Verfahrens ist vorgesehen, dass das thermoformbare Verbundmaterial bei dem Umformen in der Presse der Nadelung unterzogen wird, wobei die Nadeleinstiche durch eine mit Nadeln versehene Negativform der Presse erzeugt werden.

Die Erfindung wird im Folgenden anhand einer lediglich ein Ausführungsbeispiel darstellenden Zeichnung erläutert. Es zeigen schematisch:

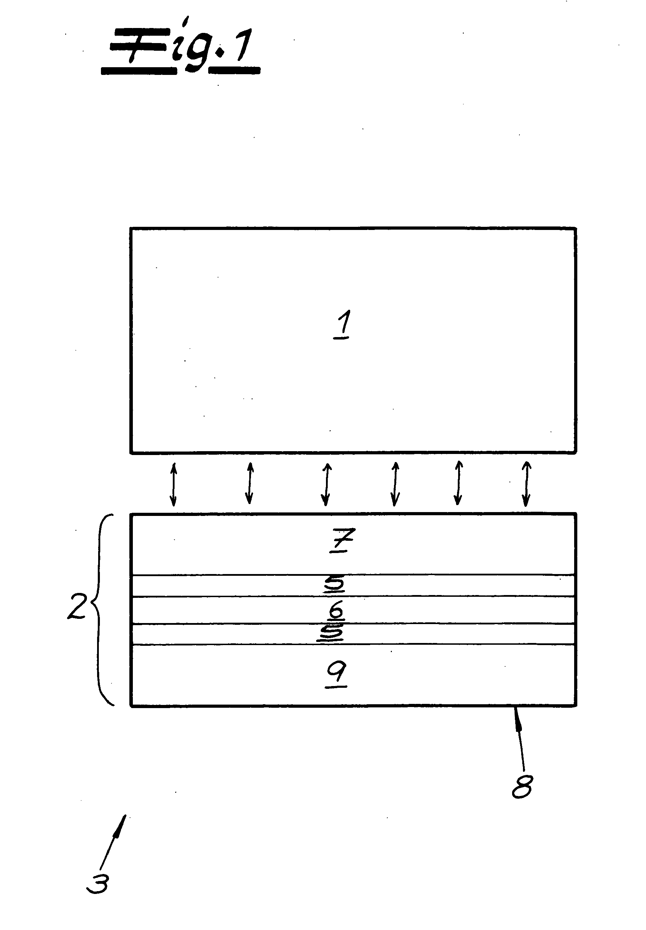

- **Fig. 1 bis Fig. 6**: den Schichtaufbau alternativer Ausführungen von erfindungsgemäßen Formteilen.

Die Figuren zeigen einen Träger 1, der aus glasfaserverstärktem Polypropylen (PP-GF) oder aus glasmattenverstärktem Polypropylen (PP-GMT) besteht. Auf den Träger 1 wird bei einer Temperatur von 200° C eine fünfschichtige coextrudierte Schutzfolie 2 mit einer Dicke von etwa 200 µm heißkaschiert. Nach der Heißkaschierung erfolgt in einer Presse bei einer Temperatur von etwa 200° C die Umformung des aus dem Träger 1 und der Schutzfolie 2 gebildeten thermoformbaren Verbundmaterials 3 zu dem Formteil für die Unterbodenauskleidung an Fahrzeugen. Bei der in Fig. 1 dargestellten Schutzfolie 2 ist eine 10 µm dicke Kernschicht aus dem zähen Polyamidtyp PA 6 als thermostabile Schicht 6 zwischen zwei Haftvermittlerschichten 5 mit einer Dicke von 5 µm angeordnet. Die Schmelztemperatur der thermostabilen Schicht 6 aus PA 6 liegt mit ca. 220° C oberhalb der Kaschiertemperatur und oberhalb der Umformtemperatur des thermoformbaren Verbundmaterials 3, weshalb die Kernschicht aus PA 6 als thermostabile Schicht 6 bei der Herstellung des Formteils nicht aufgeschmolzen wird. Die an den Träger 1 angrenzende Schicht 7 mit einer Dicke von 80 µm besteht aus Polypropylen und damit im Wesentlichen aus dem gleichen Polymer, wie die Schicht des Trägers 1, auf die sie aufkaschiert ist. Eine Verstärkung durch Glasfasern ist bei der coextrudierten Schutzfolie 2 jedoch nicht vorgesehen. Die Schutzfolie 2 weist an der von dem Träger 1 abgewandten Seite 8, also auf der fahrbahnseitigen Außenseite des Verbundmaterials 3, eine 100 µm dicke Außenschicht 9 aus Polypropylen auf, die eine hohe Abrieb- und Schlagfestigkeit gewährleistet.

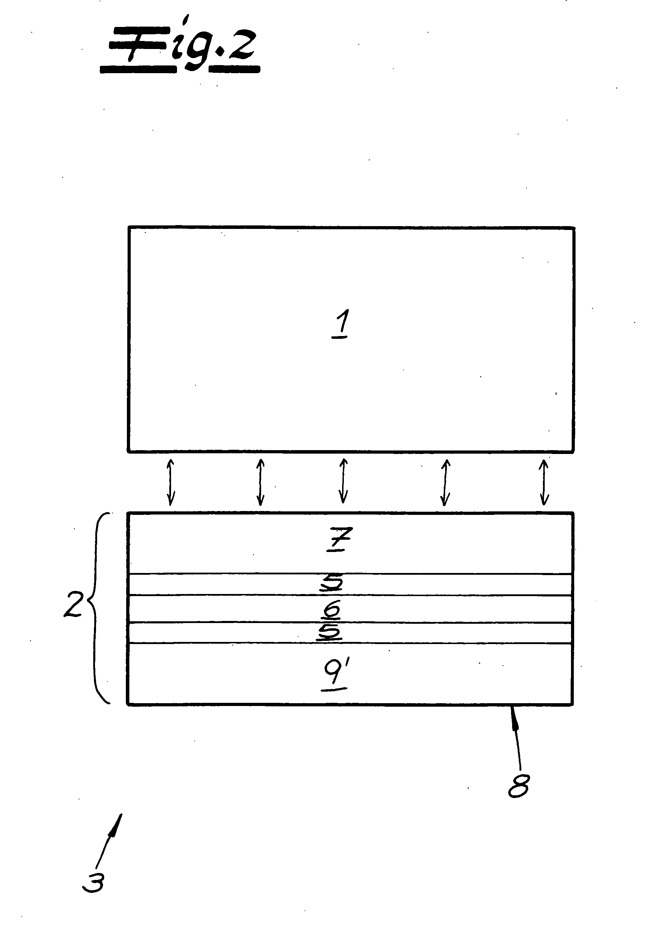

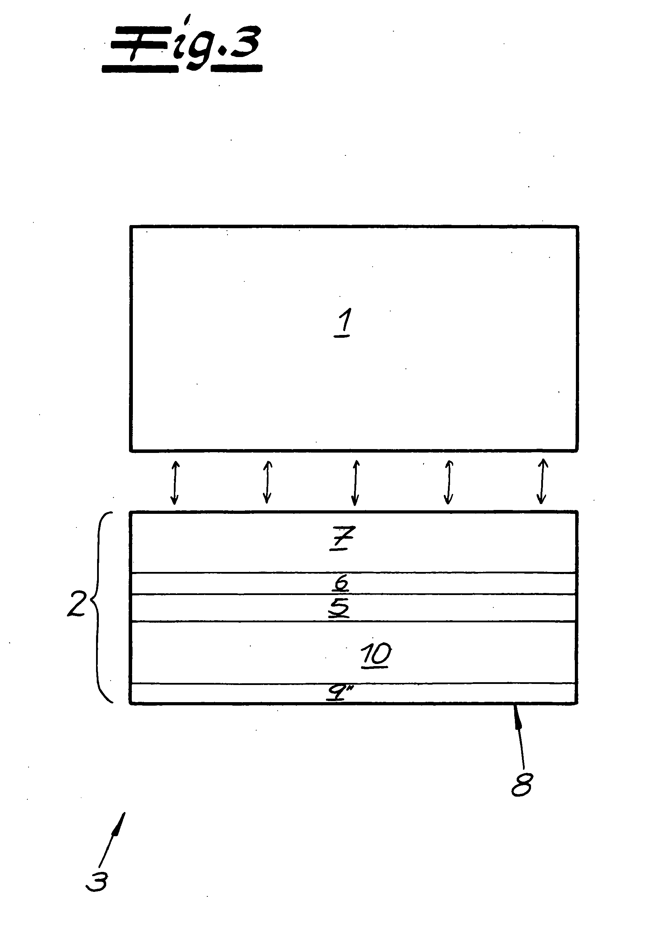

Die Fig. 2 zeigt bei sonst gleichem Aufbau eine Schutzfolie 2, die an der von dem Träger 1 abgewandten Seite 8 anstelle einer Außenschicht 9 aus Polypropylen eine 100 µm dicke Außenschicht 9' aus Styrol-Block-Copolymer aufweist. Durch die elastischen Eigenschaften von Styrol-510ck-Copolymeren werden die Schlagfestigkeit und die Schalldämmung der coextrudierten Schutzfolie 2 weiter verbessert. Die Anordnung der Schicht aus einem Styrol-Block-Copolymer an der Außenseite der Schutzfolie 2 kann jedoch bei der Coextrusion zu Ablagerungen des klebrigen Materials an der Extrusionsdüse führen. Bei der in Fig. 3 dargestellten coextrudierten Schutzfolie 2 ist die 100 µm dicke Zwischenschicht 10 aus einem Styrol-Block-Copolymer an der von dem Träger 1 abgewandten Seite 8 der Schutzfolie 2 von einer 5 µm dicken Außenschicht 9" aus Polypropylen abgedeckt. Dadurch, dass die Zwischenschicht 10 aus einem Styrol-Block-Copolymer nicht als äußere Schicht der Schutzfolie 2 angeordnet ist, können Ablagerungen an der Extrusionsdüse bei der Herstellung der Schutzfolie 2 vermieden werden. An die Zwischenschicht 10 aus Styrol-Block-Copolymer grenzt über eine 5 µm dicke Haftvermittlerschicht 5 eine 10 µm dicke thermostabile Schicht 6 aus PA 6 als Kernschicht an. Die an den Träger 1 angrenzende Schicht 7 der Schutzfolie 2 weist eine Dicke von 80 µm auf und besteht aus einer Mischung von Polypropylen und einem Haftvermittler. Bei der Kaschierung der Schutzfolie 2 mit dem Träger 1 bei einer Temperatur von 200° C verschmilzt diese Schicht 7 mit dem glasfaserverstärkten oder glasmattenverstärkten Polypropylen des Trägers 1. Die Beimischung eines Haftvermittlers gewährleistet zusätzlich eine gute Verbundfestigkeit mit der angrenzenden thermostabilen Schicht 6 aus PA 6.

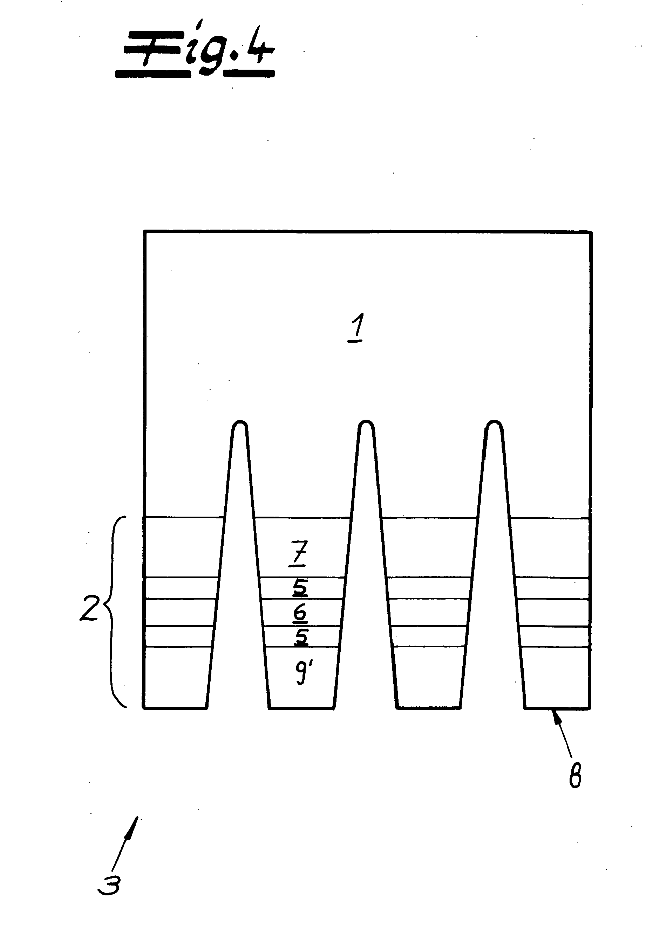

Fig. 4 zeigt ein Verbundmaterial 3 mit einem Schichtaufbau gemäß Fig. 2. Das Verbundmaterial 3 weist an der von dem Träger 1 abgewandten Seite 8 Nadeleinstiche 11 auf, die sich durch die Schutzfolie 2 hindurch bis in den Träger 1 erstrecken. Die durch die Nadeleinstiche 11 erzeugten Löcher erzeugen eine gleichmäßige Struktur an der von dem Träger 1 abgewandten Seite 8 des Verbundmaterials 3, welche zu einer verbesserten Schallabsorption beitragen.

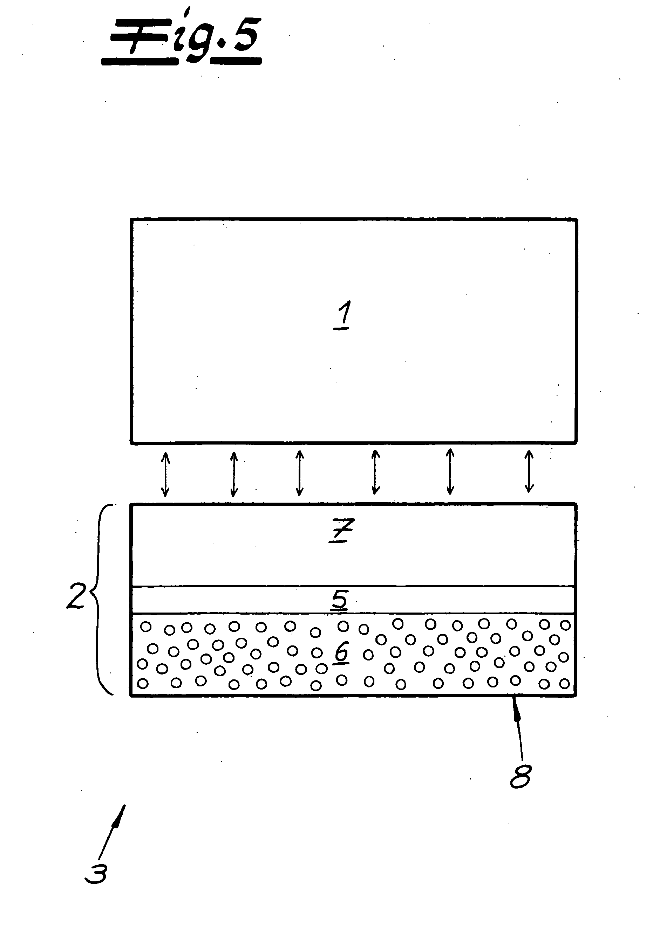

Fig. 5 zeigt eine Ausgestaltung des Verbundmaterials 3 mit einem Träger 1, auf den eine dreischichtige Schutzfolie 2 aufkaschiert ist. Die thermostabile Schicht 6 ist an der von dem Träger 1 abgewandten Seite 8 angeordnet. Die thermostabile Schicht 6 ist zur Verbesserung der mechanischen Eigenschaften einerseits und der schallabsorbierenden Eigenschaften andererseits aufgeschäumt. Die thermostabile Schicht 6 ist über eine Haftvermittlerschicht 5, die vorzugsweise aus einem melaminsäureanhydrid-modifizierten Polyolefin oder Polyolefin-Copolymer besteht, mit der an den Träger 1 angrenzenden Schicht 7 verbunden. Die an den Träger angrenzende Schicht 7 besteht aus einer Polymermischung aus Polyolefin und Styrol-Block-Copolymer.

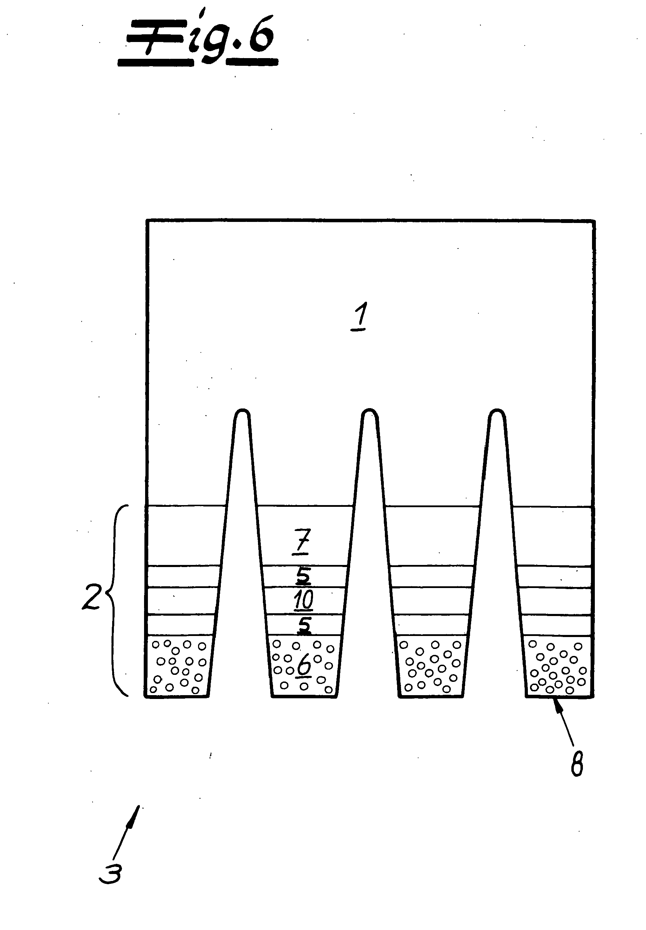

Fig. 6 zeigt eine Ausgestaltung, bei der die verschiedenen Maßnahmen zur Schallabsorption und zur Verbesserung der mechanischen Eigenschaften kombiniert sind. Die thermostabile Schicht 6, die vorzugsweise aus PA 6 besteht, ist an der von dem Träger 1 abgewandten Seite 8 angeordnet und aufgeschäumt. Zur weiteren Verbesserung der mechanischen Eigenschaften und der Schallabsorption ist als Kernschicht zwischen zwei Haftvermittlerschichten 5 eine Zwischenschicht 10 aus Styrol-Block-Copolymer angeordnet. Das Verbundmaterial 3 weist des Weiteren Nadeleinstiche 11 auf, die sich durch die Schutzfolie 2 hindurch bis in den Träger 1 erstrecken.

## Patentansprüche

1. Formteil, insbesondere für die Unterbodenauskleidung an Fahrzeugen, bestehend aus einem thermoformbaren Verbundmaterial (3) mit einem Träger (1) und einer auf den Träger (1) aufkaschierten Schutzfolie (2), **dadurch gekennzeichnet, dass** die Schutzfolie (2) mehrschichtig ausgebildet ist und zumindest eine thermostabile Schicht (6) aufweist, deren Schmelztemperatur oberhalb der Umformtemperatur des thermoformbaren Verbundmaterials (3) liegt.

2. Formteil nach Anspruch 1, **dadurch gekennzeichnet, dass** der Träger (1) eine Schicht aus faserverstärktem Polyolefin aufweist, auf die die Schutzfolie (2) aufkaschiert ist.

3. Formteil nach Anspruch 2, **dadurch gekennzeichnet, dass** der Träger (1) eine Schicht aus glasfaserverstärktem Polypropylen (PP-GF) oder aus glasmattenverstärktem Polypropylen (PP-GMT) aufweist, auf die die Schutzfolie (2) aufkaschiert ist.

4. Formteil nach einem der Ansprüche 1 bis 3, **dadurch gekennzeichnet, dass** die Schutzfolie (2) coextrudiert ist.

5. Formteil nach einem der Ansprüche 1 bis 4, **dadurch gekennzeichnet, dass** die Schutzfolie (2) eine Kernschicht aus Polyamid (PA), vorzugsweise zähem Polyamid 6 (PA 6), als thermostabile Schicht (6) aufweist.

6. Formteil nach einem der Ansprüche 1 bis 5, **dadurch gekennzeichnet, dass** die an den Träger (1) angrenzende Schicht (7) der Schutzfolie (2) im Wesentlichen aus dem gleichen Polymer besteht, wie die Schicht des Trägers (1), auf die sie aufkaschiert ist.

7. Formteil nach einem der Ansprüche 1 bis 6, **dadurch gekennzeichnet, dass** die an den Träger (1) angrenzende Schicht (7) der Schutzfolie (2) aus Polypropylen (PP) besteht.

8. Formteil nach einem der Ansprüche 1 bis 7, **dadurch gekennzeichnet, dass** die Schutzfolie (2) eine weitere Schicht aus einem Styrol-Block-Copolymer zur Verbesserung der Schalldämmeigenschaften und/oder mechanischen Eigenschaften aufweist.

9. Formteil nach einem der Ansprüche 1 bis 8, **dadurch gekennzeichnet, dass** die Schutzfolie (2) an ihrer von dem Träger (1) abgewandten Seite (8) eine Schicht (9) aus Polypropylen (PP) aufweist.

10. Formteil nach einem der Ansprüche 1 bis 9, **dadurch gekennzeichnet, dass** die Schutzfolie (2) eine Dicke zwischen 40 µm und 400 µm, vorzugsweise zwischen 150 µm und 250 µm, aufweist.

11. Formteil nach einem der Ansprüche 1 bis 10, **dadurch gekennzeichnet, dass** das Verbundmaterial (3) an der von dem Träger (1) abgewandten Seite (8) Nadeleinstiche (11) aufweist.

12. Formteil nach Anspruch 11, **dadurch gekennzeichnet, dass** die Nadeleinstiche (11) sich durch die Schutzfolie (2) bis in den Träger (1) erstrecken.

13. Formteil nach einem der Ansprüche 1 bis 12, **dadurch gekennzeichnet, dass** die Schutzfolie (2) eine aufgeschäumte Folienschicht aufweist.

14. Formteil nach Anspruch 13, **dadurch gekennzeichnet, dass** die thermostabile Schicht (6) aufgeschäumt ist.

15. Verfahren zur Herstellung eines Formteils nach einem der Ansprüche 1 bis 14, wobei eine mehrschichtige Schutzfolie (2) durch Druck und Temperatur auf einen Träger (1) aufkaschiert wird und nachfolgend das aus dem Träger (1) und der Schutzfolie (2) gebildete thermoformbare Verbundmaterial (3) in einer Presse zu dem Formteil umgeformt wird.

16. Verfahren nach Anspruch 15, **dadurch gekennzeichnet, dass** die Schutzfolie (2) in einer Doppelbandpresse bei einer Temperatur zwischen 180° C und 250° C, vorzugsweise zwischen 190° C und 210° C, auf den Träger (1) aufkaschiert wird.

17. Verfahren nach Anspruch 15 oder 16, **dadurch gekennzeichnet, dass** das aus dem Träger (1) und der Schutzfolie (2) gebildete thermoformbare Verbundmaterial (3) in der Presse bei einer Umformtemperatur zwischen 180° C und 250° C, vorzugsweise zwischen 190° C und 210° C, zu dem Formteil umgeformt wird.

18. Verfahren nach einem der Ansprüche 15 bis 17, **dadurch gekennzeichnet, dass** das thermoformbare Verbundmaterial (3) einer Nadelung unterzogen wird, wobei das Verbundmaterial (3) an der von dem Träger (1) abgewandten Seite (8) mit Nadeleinstichen (11) versehen wird.

19. Verfahren nach Anspruch 18, **dadurch gekennzeichnet, dass** die Nadeleinstiche (11) durch eine Nadelwalze erzeugt werden.

20. Verfahren nach Anspruch 18, **dadurch gekennzeichnet, dass** das thermoformbare Verbundmaterial (3) bei dem Umformen in der Presse der Nadelung unterzogen wird, wobei die Nadeleinstiche (11) durch eine mit Nadeln versehene Negativform der Presse erzeugt werden.
